# EUROPEAN PATENT APPLICATION

(11) **EP 4 440 053 A1**
(43) Date of publication of application: **02.10.2024**
(21) Application number: 22936103.5
(22) Date of filing: 06.04.2022
(51) Int. Cl.: H04L 12/66, G05B 19/418

(54) **MULTI-GATEWAY NETWORKING METHOD, APPARATUS AND SYSTEM, AND GATEWAY DEVICE AND STORAGE MEDIUM**

(71) Applicant: Beijing Xiaomi Mobile Software Co., Ltd., Beijing 100085 (CN)
(72) Inventor: LI, Shuzhen, Beijing 100085 (CN)
(74) Representative: Dehns Germany Partnerschaft mbB
(86) International application number: PCT/CN2022/085417
(87) International publication number: WO 2023/193154

(57) **Abstract**

Provided in the embodiments of the present disclosure are a multi-gateway networking method, apparatus and system, and a gateway device and a storage medium. The multi-gateway networking method comprises: receiving, by means of a second-type gateway, first information sent by a first sub-device (S11); when the first information satisfies a linkage rule, generating control signaling (S12); and sending the control signaling to a second sub-device by means of a second-type gateway, wherein the second sub-device and the first sub-device are respectively connected to different second-type gateways (S13).

## Description

### TECHNICAL FIELD

The present disclosure relates to, but is not limited to, the field of intelligent device technology or the field of multi-gateway technology, and in particular relates to a multi-gateway networking method, a device, a system, a gateway device, and a storage medium.

### BACKGROUND

With the upgrading of consumption, the intelligent device is developed rapidly in the market. More and more consumers are starting to use Internet of Things (IoT) devices in various industries. For example, in the intelligent home industry, many users already have more than dozens or hundreds of IoT devices. For example, in the future, the number of IoT devices owned by a family will generally exceed 300, and the automation linkage between the IoT devices will be more widely used.

Currently, a networking system may be provided to achieve the linkage between the IoT devices in the same local area network. However, the more the number of devices, the more difficult the linkage between the devices; the more protocols are accessed, the more difficult the linkage between the devices; and once the master gateway in the networking system does not work properly, the linkage between the other gateway devices in the networking system cannot be realized.

### SUMMARY

In order to overcome the problem in the related art, the present disclosure provides a multi-gateway networking method, a device, a system, a gateway device, and a storage medium.

A first aspect of the present disclosure provides a multi-gateway networking system, including a first class gateway, and at least one second class gateway connected to the first class gateway,
wherein the first class gateway is configured to: schedule the second class gateway and receive, through the second class gateway, first information sent by a first sub-device; and generate a control instruction in response to determining that the first information satisfies a linkage rule, and send the control instruction to a second sub-device through the second class gateway,
wherein the second sub-device and the first sub-device are connected to different second class gateways respectively.

In some embodiments, the networking system further includes at least one third class gateway,
the third class gateway is a backup gateway for the first class gateway, and
the third class gateway is connected to the first class gateway and configured to switch to be the first class gateway in response to determining that failure of the first class gateway occurs.

In some embodiments, the first class gateway is configured to synchronize control data from the first class gateway to the third class gateway, the control data including the linkage rule, and
the third class gateway is configured to switch to be the first class gateway based on the control data.

In some embodiments, the third class gateway is configured to, in response to having scanned the first class gateway, determine whether the third class gateway satisfies a predetermined condition under which the third class gateway is most qualified to serve as the first class gateway based on a network performance parameter broadcasted by the third class gateway and a network perform parameter broadcasted by the first class gateway within a predetermined window,
the third class gateway is configured to, in response to determining that the third class gateway satisfies the predetermined condition, determine to become the first class gateway and establish a connection with at least one third class gateway and/or the at least one second class gateway.

In some embodiments, the first class gateway is configured to, in response to determining that the third class gateway satisfies the predetermined condition, disconnect from the at least one second class gateway and/or the at least one third class gateway, and switch to be the third class gateway.

In some embodiments, the third class gateway is configured to keep serving as the third class gateway in response to determining that the third class gateway does not satisfy the predetermined condition.

In some embodiments, the third class gateway includes a first backup gateway and a second backup gateway,
the first backup gateway is configured to, in response to having not scanned the first class gateway after accessing to the gateway system, determine whether the first backup gateway satisfies the predetermined condition under which the first backup gateway is most qualified to serve as the first class gateway based on a network performance parameter broadcasted by the first backup gateway and a network performance parameter broadcasted by at least one second backup gateway within the predetermined window, and
the first backup gateway is configured to, in response to determining that the first backup gateway satisfies the predetermined condition, determine to become the first class gateway and establish a connection with the at least one second backup gateway and/or the at least one second class gateway.

A second aspect of the present disclosure provides a multi-gateway networking method performed by a first class gateway, including:
receiving, via a second class gateway, first information sent by a first sub-device;
generating control signaling in response to determining that the first information satisfies a linkage rule; and
sending the control signaling to a second sub-device through the second class gateway,
wherein the second sub-device and the first sub-device are connected to different second class gateways respectively.

In some embodiments, the method includes:
within a predetermined window, broadcasting a network performance parameter of the first class gateway and receiving a network performance parameter of a third class gateway broadcasted by the third class gateway;
determining whether the first class gateway satisfies a predetermined condition under which the first class gateway is most qualified to serve as the first class gateway based on the network performance parameter of the first class gateway and the network performance parameter of the third class gateway; and
in response to determining that the first class gateway does not satisfy the predetermined condition, disconnecting from at least one second class gateway, and/or disconnecting from at least one third class gateway,
wherein the third class gateway is a backup gateway for the first class gateway.

In some embodiments, the method includes:
determining that the first class gateway is switched to be the third class gateway.

In some embodiments, the method includes:
sending updated control data to a third class gateway in response to determining that the first class gateway has updated control data,
wherein the control data includes the linkage rule, and the third class gateway is a backup gateway for the first class gateway.

A third aspect of the present disclosure provides a multi-gateway networking method performed by a second class gateway, including:
sending received first information of a first sub-device to a first class gateway in response to having scanned the first class gateway;
receiving a control instruction generated by the first class gateway based on the first information, the control instruction being generated by the first class gateway in response to determining that the first information satisfies a linkage rule; and
sending the control instruction to a second sub-device,
wherein the first sub-device and the second sub-device are connected to different second class gateways respectively.

A fourth aspect of the present disclosure provides a multi-gateway networking method performed by a third class gateway, including:
establishing a connection with a first class gateway in response to having scanned the first class gateway; and
obtaining control data of the first class gateway from the first class gateway,
wherein the control data includes at least a linkage rule, the linkage rule is configured for the first class gateway to generate a control instruction in response to determining that first information satisfies the linkage rule, the control instruction is configured to be sent by the first class gateway to a second sub-device, the first information is obtained by the first class gateway from a first sub-device, and the second sub-device and the first sub-device are connected to different second class gateways respectively.

In some embodiments, the method includes:
within a predetermined window, broadcasting a network performance parameter of the third class gateway and receiving a network performance parameter of the first class gateway broadcasted by the first class gateway;
determining whether the third class gateway satisfies a predetermined condition under which the third class gateway is most qualified to serve as the first class gateway based on the network performance parameter of the third class gateway and the network performance parameter of the first class gateway; and
in response to determining that the third class gateway satisfies the predetermined condition, determining to become the first class gateway and establishing a connection with at least one third class gateway and/or at least one second class gateway.

In some embodiments, the method further includes:
keeping serving as the third class gateway in response to determining that the third class gateway does not satisfy the predetermined condition.

In some embodiments, the third class gateway includes a first backup gateway;
in response to having not scanned the first class gateway, within the predetermined window, a network performance parameter of the first backup gateway is broadcasted and a network performance parameter of at least one second backup gateway is received;
whether the first backup gateway satisfies the predetermined condition under which the first backup gateway is most qualified to serve as the first class gateway is determined based on the network performance parameter of the first backup gateway and the network performance parameter of the second backup gateway;
in response to determining that the first backup gateway satisfies the predetermined condition, the first backup gateway is determined to become the first class gateway and to establish a connection with the at least one second backup gateway and/or the at least one second class gateway.

A fifth aspect of the present disclosure provides a multi-gateway networking device applied to a first class gateway, including:
a first sending module, configured to receive, via a second class gateway, first information sent by a first sub-device; and
a first processing module, configured to generate control signaling in response to determining that the first information satisfies a linkage rule,
the first sending module is configured to send the control signaling to a second sub-device through the second class gateway,
wherein the second sub-device and the first sub-device are connected to different second class gateways respectively.

In some embodiments, the device includes a first receiving module, wherein
the first sending module is configured to, within a predetermined window, broadcast a network performance parameter of the first class gateway,
the first receiving module is configured to, within the predetermined window, receive a network performance parameter of a third class gateway broadcasted by the third class gateway,
the first processing module is configured to determine whether the first class gateway satisfies a predetermined condition under which the first class gateway is most qualified to serve as the first class gateway based on the network performance parameter of the first class gateway and the network performance parameter of the third class gateway, and
the first processing module is configured to, in response to determining that the first class gateway does not satisfy the predetermined condition, disconnect from at least one second class gateway, and/or disconnect from at least one third class gateway,
wherein the third class gateway is a backup gateway for the first class gateway.

In some embodiments, the first processing module is configured to determine that the first class gateway is switched to be the third class gateway.

In some embodiments, the first sending module is configured to send updated control data to a third class gateway in response to determining that the first class gateway has updated control data,
wherein the control data includes the linkage rule, and the third class gateway is a backup gateway for the first class gateway.

A sixth aspect of the present disclosure provides a multi-gateway networking device applied to a second class gateway, including:
a second sending module, configured to send received first information of a first sub-device to a first class gateway in response to having scanned the first class gateway; and
a second receiving module, configured to receive a control instruction generated by the first class gateway based on the first information, the control instruction being generated by the first class gateway in response to determining that the first information satisfies a linkage rule,
the second sending module is configured to send the control instruction to a second sub-device,
wherein the first sub-device and the second sub-device are connected to different second class gateways respectively.

A seventh aspect of the present disclosure provides a multi-gateway networking device applied to a third class gateway, including:
a third processing module, configured to establish a connection with a first class gateway in response to having scanned the first class gateway; and
a third receiving module, configured to obtain control data of the first class gateway from the first class gateway,
wherein the control data includes at least a linkage rule, the linkage rule is configured for the first class gateway to generate a control instruction in response to determining that first information satisfies the linkage rule, the control instruction is configured to be sent by the first class gateway to a second sub-device, the first information is obtained by the first class gateway from a first sub-device, and the second sub-device and the first sub-device are connected to different second class gateways respectively.

In some embodiments, the device further includes a third sending module,
the third sending module is configured to, within a predetermined window, broadcast a network performance parameter of the third class gateway,
the third receiving module is configured to, within the predetermined window, receive a network performance parameter of the first class gateway broadcasted by the first class gateway,
the third processing module is configured to determine whether the third class gateway satisfies a predetermined condition under which the third class gateway is most qualified to serve as the first class gateway based on the network performance parameter of the third class gateway and the network performance parameter of the first class gateway, and
the third processing module is configured to, in response to determining that the third class gateway satisfies the predetermined condition, determine to become the first class gateway and establish a connection with at least one third class gateway and/or at least one second class gateway.

In some embodiments, the third processing module is configured to keep serving as the third class gateway in response to determining that the third class gateway does not satisfy the predetermined condition.

In some embodiments, the third class gateway includes a first backup gateway,
the third sending module is configured to, in response to having not scanned the first class gateway, broadcast a network performance parameter of the first backup gateway within the predetermined window,
the third receiving module is configured to receive a network performance parameter of at least one second backup gateway within the predetermined window,
the third processing module is configured to determine whether the first backup gateway satisfies the predetermined condition under which the first backup gateway is most qualified to serve as the first class gateway based on the network performance parameter of the first backup gateway and the network performance parameter of the second backup gateway, and
the third processing module is configured to, in response to determining that the first backup gateway satisfies the predetermined condition, determine the first backup gateway to become the first class gateway and establish a communication connection with the at least one second backup gateway and/or the at least one second class gateway.

An eighth aspect of the present disclosure provides a gateway device, including:
a processor; and
a memory storing executable instructions by the processor,
wherein the processor is configured for, when running the executable instructions, implementing the multi-gateway networking method according to any embodiment of the present disclosure.

A ninth aspect of the present disclosure provides a computer readable storage medium having an executable program stored thereon that, when being executed by a processor, implements the multi-gateway networking method according to any embodiment of the present disclosure.

The technical solution of the embodiments of the present disclosure may bring the following advantageous effects.

The embodiments of the present disclosure provide a networking system. The networking system includes a first class gateway and at least one second class gateway connected to the first class gateway, the first class gateway is configured to: schedule the second class gateway and receive, through the second class gateway, first information sent by a first sub-device; and generate a control instruction when the first information satisfies a linkage rule, and send the control instruction to a second sub-device through the second class gateway, the second sub-device and the first sub-device are connected to different second class gateways respectively. In the embodiments of the present disclosure, the first class gateway may generate a control instruction based on the first information of the sub-device under one second class gateway, and send the control instruction to the sub-device under another second class gateway, so that cross-gateway scheduling may be realized, and an automatic linkage may be realized for sub-devices with different access protocols.

Moreover, since each device in the networking system is locally connected, local automatic linkage may be achieved. Moreover, since the linkage may be achieved without a cloud server, on the one hand, the dependence of the sub-device on the cloud server is eliminated, the sub-device may also operate normally in an unstable network environment, and thus the networking system may be more stable and reliable; on the other hand, the information of the devices in the networking system may be transmitted without a cloud, the path of the information transmission is shorter than that that through the cloud server, and thus the response of the linkage between the devices is faster.

Moreover, since each device in the networking system is locally connected, it can operate normally even if the router used to connect to the external network is disconnected, thereby also improving the privacy of the networking system.

It is to be understood that the above general description and the following detailed descriptions are exemplary and explanatory only and do not limit the present disclosure.

### BRIEF DESCRIPTION OF THE DRAWINGS

The accompanying drawings herein, which are incorporated into and form a part of the specification, illustrate embodiments consistent with the present disclosure and are used in conjunction with the specification to explain the principle of the present disclosure.
FIG. 1 is a schematic diagram of a multi-gateway networking system according to an exemplary embodiment of the present disclosure.
FIG. 2 is a schematic diagram of a multi-gateway networking system according to an exemplary embodiment of the present disclosure.
FIG. 3 is a schematic diagram of a multi-gateway networking system according to an exemplary embodiment of the present disclosure.
FIG. 4 is a schematic diagram of a multi-gateway networking system according to an exemplary embodiment of the present disclosure.
FIG. 5 is a schematic diagram of a multi-gateway networking system according to an exemplary embodiment of the present disclosure.
FIG. 6 is a flowchart of a multi-gateway networking method according to an exemplary embodiment of the present disclosure.
FIG. 7 is a flowchart of a multi-gateway networking method according to an exemplary embodiment of the present disclosure.
FIG. 8 is a flowchart of a multi-gateway networking method according to an exemplary embodiment of the present disclosure.
FIG. 9 is a flowchart of a multi-gateway networking method according to an exemplary embodiment of the present disclosure.
FIG. 10 is a flowchart of a multi-gateway networking method according to an exemplary embodiment of the present disclosure.
FIG. 11 is a block diagram of a multi-gateway networking device according to an exemplary embodiment of the present disclosure.
FIG. 12 is a block diagram of a multi-gateway networking device according to an exemplary embodiment of the present disclosure.
FIG. 13 is a block diagram of a multi-gateway networking device according to an exemplary embodiment of the present disclosure.
FIG. 14 is a block diagram of a terminal according to an exemplary embodiment of the present disclosure.

### DETAILED DESCRIPTION

Exemplary embodiments will be described herein in detail, examples of which are represented in the accompanying drawings. When the following description is made with reference to the accompanying drawings, the same reference numerals in different accompanying drawings indicate the same or similar elements unless otherwise indicated. The implementations described in the following exemplary embodiments do not represent all implementations consistent with the embodiments of the present disclosure. Rather, they are only examples of devices and methods consistent with some aspects of the embodiments of the present disclosure as detailed in the appended claims.

The terminology used in the embodiments of the present disclosure is used solely for the purpose of describing particular embodiments and is not intended to limit the embodiments of the present disclosure. The singular forms of "a" and "the" used in the embodiments of the present disclosure and the appended claims are also intended to include a plural form, unless the context clearly indicates otherwise. It is also to be understood that the term "and/or" as used herein refers to and includes any or all possible combinations of one or more of the associated listed items.

It is to be understood that while the terms first, second, third, etc. may be used in the embodiments of the present disclosure to describe various types of information, such information should not be limited by these terms. These terms are only used to distinguish the same class of information from one another. For example, without departing from the scope of embodiments of the present disclosure, first information may also be referred to as second information, and similarly, second information may be referred to as first information. Depending on the context, as used herein, the phrase "if" may be interpreted as "at ......" or "when ......" or "in response to determining".

In order to better understand the technical solutions described in any of the embodiments of the present disclosure, firstly, the networking system in the related art is partially described.

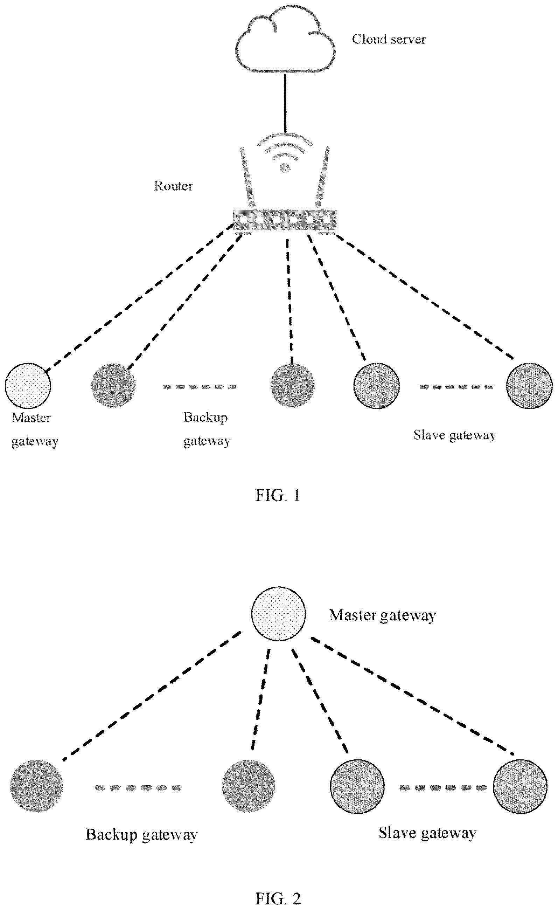

As shown in FIG. 1, in some embodiments, a networking system is provided. The networking system includes: one master gateway, at least one backup gateway, and at least one slave gateway. At the physical layer, the master gateway, the backup gateway and the slave gateway may be connected to a router, which is connected to a cloud server. Here, the master gateway, the backup gateway and the slave gateway may all be connected to the router via a wireless connection, or may also be connected to the router via a wired connection.

As shown in FIG. 2, in some embodiments, at the transport layer, the master gateway establishes a communication connection with the backup gateway; and/or, the master gateway establishes a communication connection with the slave gateway. Here, the communication connection may be: a point-to-point communication connection for an encrypted transmission channel. Here, the networking system may form a topologically structured network system by taking the master gateway as a center.

In some embodiments, the master gateway may be a central device of the networking system, and the master gateway stores and/or executes a linkage rule. Herein, the linkage rule may be used for the master gateway to schedule the backup gateway and/or slave gateway.

In some embodiments, the backup gateway may be a backup of the master gateway, and the backup gateway is used to back up information of the master gateway based on a predetermined time interval or to receive information sent by the backup gateway based on information update. Here, the backup gateway may be switched to be the master gateway upon failure of the master gateway.

In some embodiments, the slave gateway receives scheduling from the master gateway. The slave gateway may be a bridging gateway, for example it may be a bridging gateway for a wireless network communication technology (WiFi) device.

In some embodiments, at the application layer, the networking system is differentiated by "home" or "LAN". For example, one user may have a plurality of accounts, and one account may create a plurality of "homes" or "LANs". Here, one user account corresponds to one user identification number (UID), which is used to uniquely identify the account, and one home corresponds to one home identification number (Home ID), which is used to uniquely identify the home. After a user registers an account, the user may obtain the user ID of the account through a cloud server, and the user after logging into the account may create a home and obtain the home ID of the home through the cloud server. Gateways in the same home or the same LAN form one networking system, in which there is one and only one master gateway.

In an embodiment, if the linkage rule is stored in the master gateway, the linkage rule may be used for the master gateway to schedule devices in the networking system.

In another embodiment, if the linkage rule is stored in the cloud server, the linkage rule may be used for the cloud server to schedule devices in a plurality of networking systems.

In some embodiments, the networking system includes a master gateway, a backup gateway, and a slave gateway. The gateways included in the networking system may be divided into two classes: a fixed identity gateway, for example, the fixed identity gateway is a slave gateway; and a non-fixed identity gateway, for example, the non-fixed identity gateway is a master gateway or a backup gateway. Here, the identity of the fixed identity gateway does not change after the gateway joins the networking system. After the non-fixed identity gateway joins the networking system, the identity thereof will change. For example, the mater gateway may become a backup gateway, and the backup gateway may become a mater gateway.

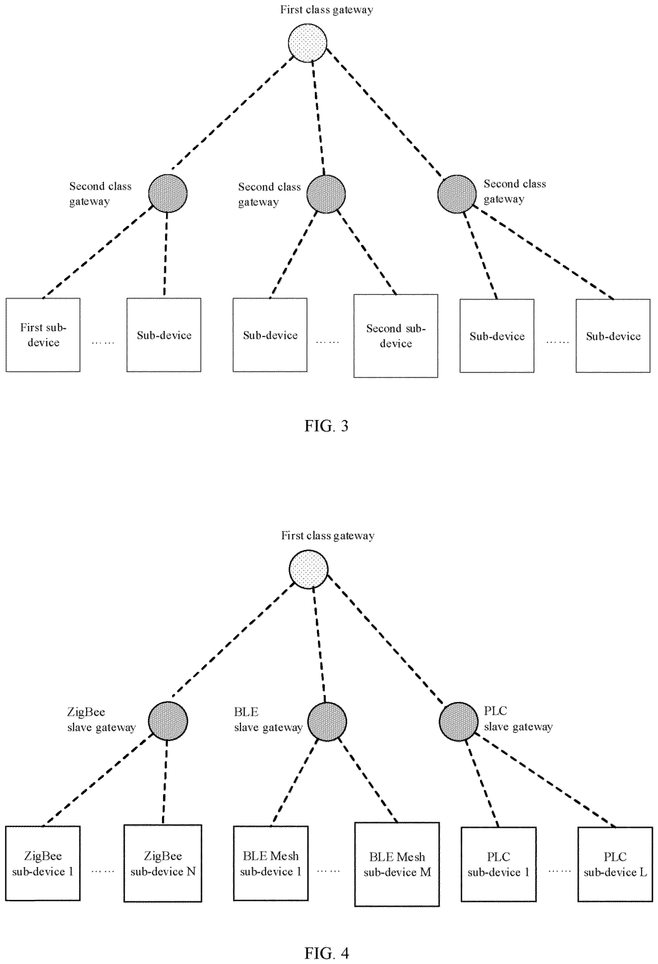

As shown in FIG. 3, an embodiment of the present disclosure provides a multi-gateway networking system including a first class gateway and at least one second class gateway connected to the first class gateway.

The first class gateway is configured to schedule the second class gateway and receive, through the second class gateway, first information sent by a first sub-device; and generate a control instruction when the first information satisfies a linkage rule, and send the control instruction to a second sub-device through the second class gateway. The second sub-device and the first sub-device are connected to different second class gateways respectively.

Herein, either of the first class gateway and the second class gateway may be a gateway of any one of the protocols. For example, either of the first class gateway and the second class gateway may be, but is not limited to, a WiFi gateway, a ZigBee gateway, a Bluetooth (BLE) gateway, a Programmable Logic Controller (PLC) gateway and/or a wireless mesh network (Mesh) gateway, and the like.

In an embodiment, the first class gateway may be a master gateway, and the second class gateway may be a slave gateway.

Here, both the first sub-device and the second sub-device may be various terminal devices. For example, they may be, but are not limited to, mobile phones, laptops, computers, wearable devices, televisions, speakers, and/or various intelligent appliances, and the like.

Here, both the first sub-device and the second sub-device may be, but are not limited to, any kind of IoT devices.

Here, both the first sub-device and the second sub-device may be, but are not limited to, sub-devices of any of the access protocols. For example, the access protocol may be, but is not limited to, an access protocol such as WiFi, ZigBee, BLE, Mesh, BLE Mesh, and/or PLC, and both of the first and second sub-devices may be WiFi sub-devices, ZigBee sub-devices, or BLE Mesh sub-devices, and the like.

Here, the second class gateway connected to the first sub-device may be a first slave gateway, the second class gateway connected to the second sub-device may be a second slave gateway, and the first slave gateway and the second slave gateway are gateways with the same protocol or with different protocols.

Here, the connection in the networking system may be any kind of communication connection. For example, the communication connection may be a wireless communication connection or a wired communication connection. For example, the communication connection may be a WiFi connection, a Bluetooth connection, a near field communication connection.

In some embodiments, the second class gateway is configured to receive an uplink message sent by a sub-device of the second gateway and send the uplink message to the first class gateway; and/or receive a downlink message sent by the first class gateway and send the downlink message to the sub-device of the second gateway.

For example, as shown in FIG. 4, one first class gateway and three second class gateways are included in the networking system, and the three second class gateways may be one ZigBee slave gateway, one BLE slave gateway, and one PLC slave gateway, respectively; the ZigBee slave gateway may be connected to N ZigBee sub-devices, the BLE slave gateway may be connected to M BLE Mesh sub-devices, and the PLC slave gateway may be connected to L sub-devices, where N, M, and L may be integers greater than 0. When the three second class gateways establish communication connections with the first class gateway, the three second class gateways may obtain uplink messages from the sub-devices and send the uplink messages to the first class gateway; and/or the three second class gateways may receive a downlink message from the first class gateway and send the downlink message to the sub-devices of the second class gateway. For example, the ZigBee slave gateway may obtain the downlink message from the first class gateway and send the downlink message to at least one of the ZigBee sub-device 1 to the ZigBee sub-device N. As another example, the BLE slave gateway may receive an uplink message from at least one of the BLE Mesh sub-device 1 to the BLE Mesh sub-device M and send the uplink message to the first class gateway.

Here, the linkage rule may be used to specify a rule for a triggering operation of the first sub-device to trigger a linkage operation of the second sub-device. The first sub-device and the second sub-device are respectively connected to different second class gateways. Here, the linkage rule may be one or more rules. In some embodiments of the present disclosure, a plurality means two or more.

Here, the triggering operation may be any operation, and the linkage operation may also be any operation. For example, the triggering operation may be an operation of turning on a light under the first slave gateway, and the linkage operation may be an operation of turning off an air conditioner under the second slave gateway. Alternatively, for example, the triggering operation may be an operation of playing music from a speaker under the first slave gateway, and the linkage operation may be an operation of closing a door under the second gateway; and so on.

Here, the first information may be any kind of information. In an embodiment, the first information may be information in the linkage rule or information associated with the information in the linkage rule.

Here, the control signaling may be any kind of signaling. In an embodiment, the control signaling is used for the second sub-device to perform a corresponding linkage operation.

For example, the linkage rule is set in advance in the first class gateway of the networking system as "turning on light then turning off air conditioner". In the networking system, the light is connected to the networking system via a Bluetooth mesh gateway, and the air conditioner is connected to the networking system via a ZigBee gateway. The light is a triggering device and the air conditioner is an executing device, and the Bluetooth Mesh gateway and the ZigBee gateway are connected to the master gateway in the networking system. When the light is turned on, the light generates first information, and a first information indicator is turned on, and the Mesh Bluetooth gateway sends the first information to the master gateway. If the master gateway determines that the first information satisfies the linkage rule of "turning on light then turning off air conditioner", the master gateway generates a control instruction, which is used to instruct to turn off the air conditioner, and the master gateway sends the control instruction to the ZigBee gateway. The ZigBee gateway sends the control instruction to the air conditioner that has established a communication connection with the ZigBee gateway; and the air conditioner is turned off based on the control instruction.

In an embodiment of the present disclosure, the first class gateway may generate a control instruction based on the first information of the sub-device under one second class gateway, and send the control instruction to the sub-device under another second class gateway, so that cross-gateway scheduling may be realized, and an automatic linkage may be realized for sub-devices with different access protocols.

Moreover, since each device in the networking system is locally connected, local automatic linkage may be achieved. Moreover, since the linkage may be achieved without a cloud server, on the one hand, the dependence of the sub-device on the cloud server is eliminated, the sub-device may also operate normally in an unstable network environment, and thus the networking system may be more stable and reliable; on the other hand, the information of the devices in the networking system may be transmitted without a cloud, the path of the information transmission is shorter than that that through the cloud server, and thus the response of the linkage between the devices is faster.

Moreover, since each device in the networking system is locally connected, it can operate normally even if the router used to connect to the external network is disconnected, thereby also improving the privacy of the networking system.

In some embodiments, the second class gateway is used to connect to a cloud server outside the networking system if the second class gateway have not scanned the first class gateway or cannot connect to the first class gateway. In this way, the second class gateway may also communicate with other devices of the networking system or other networking systems via the cloud server.

Here, each gateway in the networking system may send a message frame that carries a gateway class of such gateway; then each gateway in each networking system may determine, through the received message frame, the class of the gateway that sends the message frame. The gateway class includes, but is not limited to, one of a first class gateway, a second class gateway, and a third class gateway.

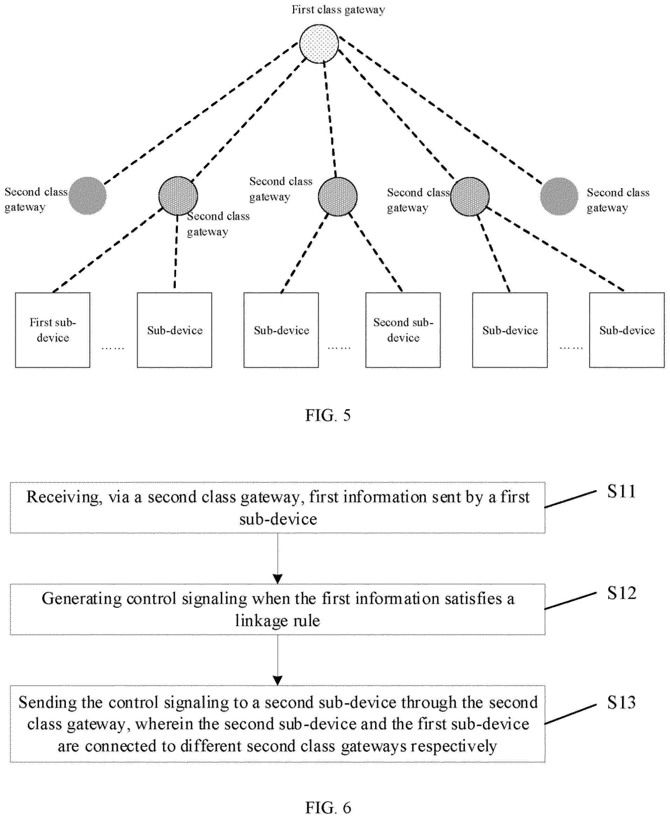

As shown in FIG. 5, in some embodiments, the networking system further includes at least one the third class gateway.

The third class gateway is a backup gateway for the first class gateway.

The third class gateway is connected to the first class gateway and configured to switch to be the first class gateway when failure of the first class gateway occurs.

Here, the first class gateway is also used for scheduling the third class gateway.

Here, the third class gateway may also be a gateway of any protocol, for example, either of the first gateway and the second gateway may be, but is not limited to, a WiFi gateway, a ZigBee gateway, a Bluetooth (BLE) gateway, a Programmable Logic Controller (PLC) gateway and/or a wireless mesh network (Mesh) gateway, and the like.

In an embodiment, the third class gateway may be a backup gateway.

Here, the failure of the first class gateway includes, but is not limited to, at least one of
power failure of the first class gateway;
disconnection of the first class gateway from the second class gateway and/or the third class gateway; and
removement of the first class gateway from the networking system.

In this way, in an embodiment of the present disclosure, when the failure of the first class gateway occurs, the third class gateway may be switched to be the first class gateway, so that the third class gateway used for backup may be seamlessly switched to be the first class gateway. This can make the networking system highly disaster-tolerant and improve the availability and stability of the networking system.

In some embodiments, the first class gateway is configured to synchronize control data from the first class gateway to the third class gateway, wherein the control data includes the linkage rule.

The third class gateway is configured to switch to be the first class gateway based on the control data.

In an embodiment, the third class gateway is configured to switch to be the first class gateway based on the control data when the failure of the first class gateway occurs.

Here, the control data may also be, but is not limited to, identification information of the first class gateway, identification information of at least one second class gateway, identification information of at least one third class gateway, a maximum number of scheduled sub-devices, a number of currently scheduled sub-devices, capability information of the first class gateway and/or the second class backup gateway and/or the third class gateway and/or the sub-device, and the like.

In an embodiment, the first class gateway is configured to send updated control data to at least one third class gateway when the control data is updated. In this way, in an embodiment of the present disclosure, the control data can be synchronized to the third class gateway as soon as the control data is updated, enabling the third class gateway to back up the same in a timely manner.

In another embodiment, the third class gateway obtains the control data of the first class gateway based on a predetermined time interval.

For example, the third class gateway is configured to send a request message to the first class gateway, and the request message is configured for requesting the control data. The first class gateway is configured to send the control data in the first class gateway to the third class gateway based on the received request message.

In this way, in an embodiment of the present disclosure, the control data may also be actively backed up from the first class gateway by a backup device, i.e., the third class gateway.

In an embodiment of the present disclosure, synchronizing the control data of the first class gateway to the third class gateway may provide a condition for the third class gateway to switch to be the first class gateway, so that such third class gateway may have the same or similar scheduling capability when switching to be the first class gateway, and the stability and usability of the networking system are improved after the failure of the first gateway occurs in the networking system and thus the third class gateway becomes the first class gateway.

In some embodiments, the third class gateway is configured to, if it has scanned the first class gateway, determine whether the third class gateway satisfies a predetermined condition under which the third class gateway is most qualified to serve as the first class gateway based on a network performance parameter broadcasted by the third class gateway and a network perform parameter broadcasted by the first class gateway within a predetermined window.

The third class gateway is configured to, if it determines that the third class gateway satisfies the predetermined condition, determine to become the first class gateway and establish a connection with at least one third class gateway and/or the at least one second class gateway.

Herein, the network performance parameter includes at least one of:
a device priority, wherein a level of the device priority is positively correlated with a device capability of a corresponding gateway device;
a link type, wherein different gateway devices establish different link types for network interconnection;
a signal quality, wherein the signal quality of a gateway device currently supporting a wired connection is stronger than the signal quality of the network device currently supporting a wireless connection; and
a device identification code (DID) character, wherein different gateway devices have different DID characters.

Here, the gateway device includes, but is not limited to: a first class gateway, a second class gateway, and/or a third class gateway.

Herein, the predetermined condition under which the third class gateway is most qualified to serve as the first class gateway includes at least one of:
the device priority of the third class gateway being higher than the device priority of the first class gateway;
the third class gateway having the same device priority as the first class gateway and the link priority of the third class gateway being higher than the link priority of the first class gateway;
the third class gateway having the same device priority and the same link priority as the first class gateway, and the signal quality strength of the third class gateway being higher than the signal quality strength of the first class gateway; and
the third class gateway having the same device priority, the same link priority and the same signal quality strength as the first class gateway, and the number of DID characters of the third class gateway being greater than the number of DID characters of the first class gateway.

Here, the predetermined window is a predetermined time range.

Here, the predetermined window includes a first class window. The first class window is a time window for the third class gateway to challenge the first class gateway.

In an embodiment of the present disclosure, the third class gateway may be configured to challenge the first class gateway, for example, when the networking system reselects the first class gateway. For example, the third class gateway determines whether the third class gateway is most qualified to serve as the first class gateway based on a network performance parameter of the third class gateway and a network perform parameter broadcasted by the first class gateway, and if it is yes, the third class gateway may become the first class gateway. In this way, the networking system in the embodiment of the present disclosure may cause the gateway with the best performance to be the first class gateway.

In some embodiments, the first class gateway is configured to, if it determines that the third class gateway satisfies the predetermined condition, disconnect from the at least one second class gateway and/or the at least one third class gateway, and switch to be the third class gateway.

In an embodiment of the present disclosure, the first class gateway is switched to be the third class gateway if the third class gateway successfully challenges the first class gateway, i.e., if the third class gateway is the gateway most qualified to service as the first class gateway. In this way, the networking system in the embodiment of the present disclosure allows the gateway with the best performance to be the first class gateway.

In some embodiments, the third class gateway is configured to keep serving as the third class gateway if it determines that the third class gateway does not satisfy the predetermined condition.

Here, the case where the third class gateway does not satisfy the predetermined condition includes at least one of:
the device priority of the first class gateway being higher than the device priority of the third class gateway;
the first class gateway having the same device priority as the third class gateway and the link priority of the first class gateway being higher than the link priority of the third class gateway;
the third class gateway having the same device priority and the same link priority as the first class gateway, and the signal quality strength of the first class gateway being higher than the signal quality strength of the third class gateway; and
the third class gateway having the same device priority, the same link priority and the same signal quality strength as the first class gateway, and the number of DID characters of the first class gateway being greater than the number of DID characters of the third class gateway.

In an embodiment of the present disclosure, if the third class gateway fails in the challenge, i.e., when the third class gateway is not the gateway that is most qualified to serve as the first class gateway, the third class gateway remains unchanged in the identity of the third class gateway. In this way, the networking system in the embodiment of the present disclosure allows the gateway with the best performance to be the first class gateway.

In some embodiments, the third class gateway includes a first backup gateway and a second backup gateway.

The first backup gateway is configured to, if it has not scanned the first class gateway after accessing to the gateway system, determine whether the first backup gateway satisfies the predetermined condition under which the first backup gateway is most qualified to serve as the first class gateway based on a network performance parameter broadcasted by the first backup gateway and a network performance parameter broadcasted by the at least one second backup gateway within the predetermined window.

The first backup gateway is configured to, if it determines that the first backup gateway satisfies the predetermined condition, determine to become the first class gateway and establish a connection with the at least one second backup gateway and/or the at least one second class gateway.

Here, both the first backup gateway and the second backup gateway may be any of the third class gateways in the networking system.

Here, the predetermined window includes a second class window. The second class window is a time window for the at least one third class gateway to select the first class gateway.

Here, the case where the first backup gateway satisfies the predetermined conditions includes at least one of:
the device priority of the first backup gateway being higher than the device priority of each second backup gateway;
the first backup gateway having the same device priority as each second backup gateway and the link priority of the first backup gateway being higher than the link priority of each second backup gateway;
the first backup gateway having the same device priority and the same link priority as each second backup gateway, and the signal quality strength of the first backup gateway being higher than the signal quality strength of each second backup gateway; and
the first backup gateway having the same device priority, the same link priority and the same signal quality strength as each second backup gateway, and the number of DID characters of the first backup gateway being greater than the number of DID characters of each second backup gateway.

In this way, in an embodiment of the present disclosure, a selection may be made among a plurality of third class gateways (i.e., the first backup gateway and the second backup gateway), and the third class gateway with the best performance is selected as the first class gateway.

The following multi-gateway networking method, which is performed by the first class gateway, corresponds to the above description of the multi-gateway networking system; and for the undisclosed technical details in the embodiment of the multi-gateway networking method performed by the first class gateway, please refer to the description of the example of the multi-gateway networking system, which will not be described and illustrated in detail herein.

FIG. 6 is a multi-gateway networking method according to an exemplary embodiment. The multi-gateway networking method, as shown in FIG. 6, includes:
step S11, receiving, via a second class gateway, first information sent by a first sub-device;
step S12, generating control signaling when the first information satisfies a linkage rule; and
step S13, sending the control signaling to a second sub-device through the second class gateway, wherein the second sub-device and the first sub-device are connected to different second class gateways respectively.

The multi-gateway networking method provided by an embodiment of the present disclosure is performed by a first class gateway.

In some embodiments of the present disclosure, the linkage rule is the linkage rule described in the above embodiment, the first information is the first information described in the above embodiment, and the control signaling is the control signaling described in the above embodiment.

In some embodiments, the method further includes:
within a predetermined window, broadcasting a network performance parameter of the first class gateway and receiving a network performance parameter of a third class gateway broadcasted by the third class gateway;
determining whether the first class gateway satisfies a predetermined condition under which the first class gateway is most qualified to serve as the first class gateway based on the network performance parameter of the first class gateway and the network performance parameter of the third class gateway; and
if it determines that the first class gateway does not satisfy the predetermined condition, disconnecting from at least one second class gateway, and/or disconnecting from at least one third class gateway, wherein the third class gateway is a backup gateway for the first class gateway.

Here, the predetermined window may be the first class window described in the above embodiments.

In some embodiments, the method includes:
determining that the first class gateway switches to be the third class gateway if it determines that the first class gateway does not satisfy the predetermined condition.

In some embodiments, the method includes:
sending updated control data to a third class gateway if it determines that the first class gateway has updated control data, wherein the control data includes the linkage rule, and the third class gateway is a backup gateway for the first class gateway.

The implementation of the above may be specifically referred to the description regarding the first class gateway side in the multi-gateway networking system, which will not be repeated herein.

It is to be noted that a person skilled in the art may understand that the method provided in the embodiment of the present disclosure may be executed alone or together with some methods in the embodiments of the present disclosure or some methods in the related art.

The following multi-gateway networking method, which is performed by the second class gateway, corresponds to the above description of the multi-gateway networking system and is similar to the description of the multi-gateway networking method performed by the first class gateway; and for the undisclosed technical details in the embodiment of the multi-gateway networking method performed by the second class gateway, please refer to the description of the example of the multi-gateway networking system and the description of the example of the multi-gateway networking method performed by the first class gateway, which will not be described and illustrated in detail herein.

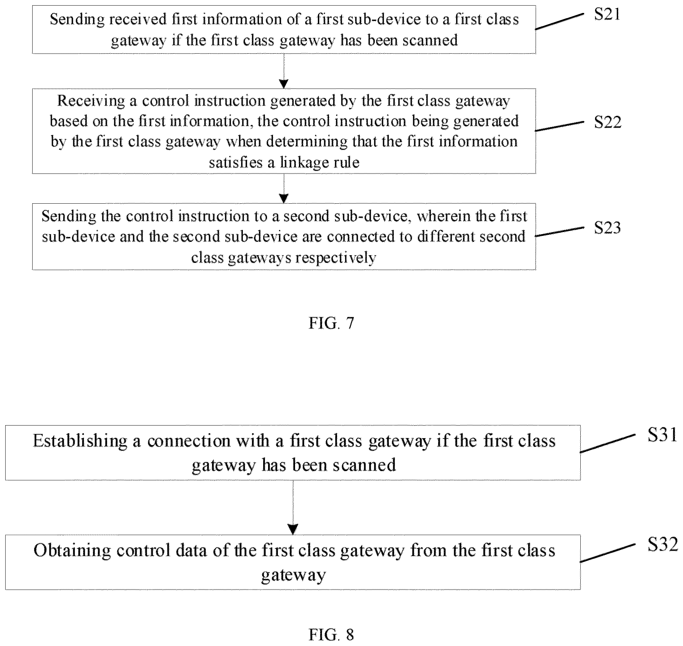

FIG. 7 is a multi-gateway networking method according to an exemplary embodiment. The multi-gateway networking method, as shown in FIG. 7, includes:
step S21, sending received first information of a first sub-device to a first class gateway if the first class gateway has been scanned;
step S22, receiving a control instruction generated by the first class gateway based on the first information, the control instruction being generated by the first class gateway when determining that the first information satisfies a linkage rule; and
step S23, sending the control instruction to a second sub-device, wherein the first sub-device and the second sub-device are connected to different second class gateways respectively.

The multi-gateway networking method provided by an embodiment of the present disclosure is performed by the second class gateway.

In some embodiments of the present disclosure, the linkage rule is the linkage rule described in the above embodiment, the first information is the first information described in the above embodiment, and the control signaling is the control signaling described in the above embodiment.

The implementation of the above may be specifically referred to the description regarding the first class gateway side, which will not be repeated herein.

It is to be noted that a person skilled in the art may understand that the method provided in the embodiment of the present disclosure may be executed alone or together with some methods in the embodiments of the present disclosure or some methods in the related art.

The following multi-gateway networking method, which is performed by the third class gateway, corresponds to the above description of the multi-gateway networking system and is similar to the description of the multi-gateway networking method performed by the first class gateway and/or the second class gateway; and for the undisclosed technical details in the embodiment of the multi-gateway networking method performed by the third class gateway, please refer to the description of the example of the multi-gateway networking system and the description of the example of the multi-gateway networking method performed by the first class gateway and/or the second class gateway, which will not be described and illustrated in detail herein.

FIG. 8 is a multi-gateway networking method according to an exemplary embodiment. The multi-gateway networking method, as shown in FIG. 8, includes:
step S31, establishing a connection with a first class gateway if the first class gateway has been scanned; and
step S32, obtaining control data of the first class gateway from the first class gateway.

The control data includes at least a linkage rule, the linkage rule is configured for the first class gateway to generate a control instruction when determining that first information satisfies the linkage rule, the control instruction is configured to be sent by the first class gateway to a second sub-device, the first information is obtained by the first class gateway from a first sub-device, and the second sub-device and the first sub-device are connected to different second class gateways respectively.

The multi-gateway networking method provided by an embodiment of the present disclosure is performed by a third class gateway.

In some embodiments of the present disclosure, the control data may be the control data described in the above embodiments, and the linkage rule may be the linkage rule described in the above embodiments.

In some embodiments, the method includes:
within a predetermined window, broadcasting a network performance parameter of the third class gateway and receiving a network performance parameter of the first class gateway broadcasted by the first class gateway;
determining whether the third class gateway satisfies a predetermined condition under which the third class gateway is most qualified to serve as the first class gateway based on the network performance parameter of the third class gateway and the network performance parameter of the first class gateway; and
if it determines that the third class gateway satisfies the predetermined condition, determining to become the first class gateway and establishing a connection with at least one third class gateway and/or at least one second class gateway.

In some embodiments of the present disclosure, the network performance parameter is the network performance parameter described in the above embodiments.

Here, the predetermined window includes a first class window.

In some embodiments, the method further includes:
keeping serving as the third class gateway if it determines that the third class gateway does not satisfy the predetermined condition.

In some embodiments, the third class gateway includes a first backup gateway.

If the first class gateway has not been scanned, within the predetermined window, a network performance parameter of the first backup gateway is broadcasted and a network performance parameter of at least one second backup gateway is received.

Whether the first backup gateway satisfies the predetermined condition under which the first backup gateway is most qualified to serve as the first class gateway is determined based on the network performance parameter of the first backup gateway and the network performance parameter of the second backup gateway.

If it determines that the first backup gateway satisfies the predetermined condition, the first backup gateway is determined to become the first class gateway and to establish a connection with the at least one second backup gateway and/or the at least one second class gateway.

Here, the predetermined window includes a second class window.

The implementation of the above may be specifically referred to the description regarding the first class gateway side and/or the second class gateway side, which will not be repeated herein.

It is to be noted that a person skilled in the art may understand that the method provided in the embodiment of the present disclosure may be executed alone or together with some methods in the embodiments of the present disclosure or some methods in the related art.

To further explain any embodiment of the present disclosure, two specific examples are provided below.

### EXAMPLE I

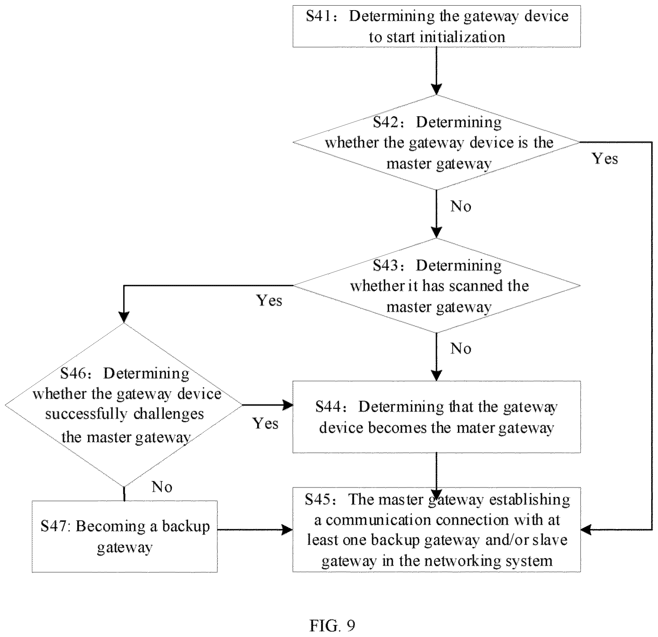

As shown in FIG. 9, a multi-gateway networking method is provided, which is performed by a gateway device, and may include the following steps.

Here, the gateway device may be a first class gateway or a third class gateway. Here, the first class gateway is a mater gateway, and the third class gateway is a backup gateway.

In step S41, the gateway device determines to start initialization.

In step S42, the gateway device determines whether the gateway device is the master gateway, if not, it performing step S43, and if so, it performs step S45.

In step S43, the gateway device determines whether it has scanned the master gateway, if not, it performs step S44, and if so, it performs step S46.

In step S44, the gateway device determines that the gateway device becomes the mater gateway.

In an optional embodiment, the gateway device: if the gateway device has not scanned the master gateway, broadcasts a network performance parameter of the gateway device and receives a network performance parameter of at least one backup gateway in a networking system within a predetermined window; determines, based on the network performance parameter of the gateway device and the network performance parameter of the at least one backup gateway, whether the gateway device satisfies a predetermined condition under which the gateway device is most qualified to server as the master gateway; and if it determines that the gateway device satisfies the predetermined condition under which the gateway device is most qualified to server as the master gateway, determines that the gateway device becomes the master gateway.

In step S45, the master gateway establishes a communication connection with at least one backup gateway and/or a slave gateway in the networking system.

In step S46, the gateway device determines whether the gateway device successfully challenges the master gateway, if so, it performs step S44, and if not, it performs step S47.

In an optional embodiment, the gateway device: if the gateway device has scanned the master gateway, broadcasts the network performance parameter of the gateway device and receives the network performance parameter of the master gateway within a predetermined window; determines, based on the network performance parameter of the gateway device and the network performance parameter of the master gateway, whether or not the gateway device satisfies a predetermined condition under which the gateway device is most qualified to serve as the master gateway; and if so, determines that the gateway device successfully challenges the master gateway, and determines that the gateway device becomes the master gateway.

In step S47, the gateway device becomes a backup gateway.

Thus, in the embodiment of the present disclosure, when the failure of the mater gateway of the networking system occurs or a new gateway device is added to the networking system, the gateway device may be connected to the networking system for communication by determining whether the gateway device serves as the mater gateway or the backup gateway. Here, the steps S41 to S47 may be considered as an initialization of the gateway device serving as the master gateway or the backup gateway.

In this way, in the embodiment of the present disclosure, the backup gateway used for backup may be seamlessly switched to be the master gateway. This can make the networking system highly disaster-tolerant and improve the availability and stability of the networking system.

### EXAMPLE II

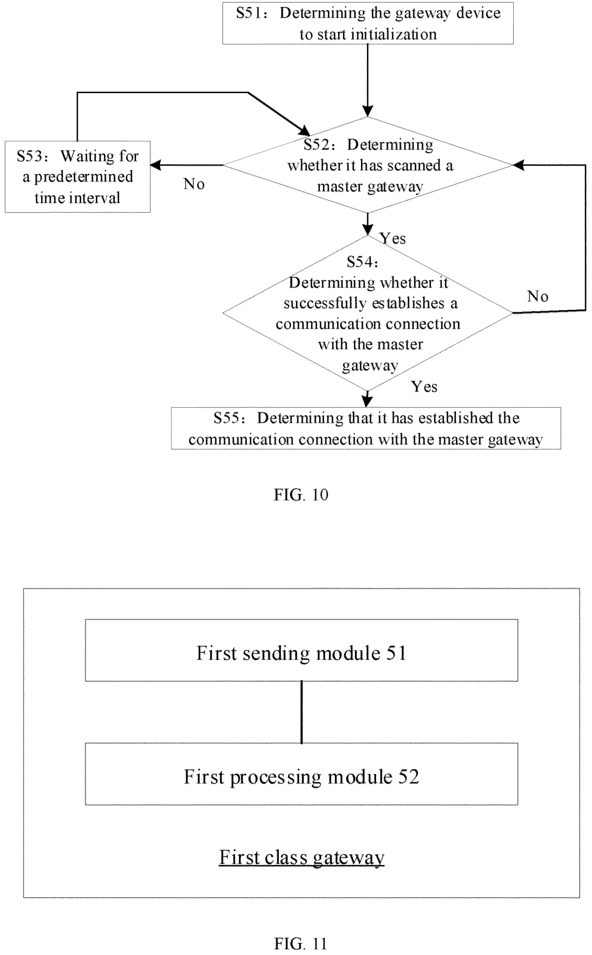

As shown in FIG. 10, a multi-gateway networking method is provided, which is performed by a gateway device and may include the following steps.

Here, the gateway device may be a second class gateway. Here, the second class gateway is a slave gateway.

In step S51, the gateway device determines to start initialization.

In an optional embodiment, before step S52, the gateway device determines that the gateway device is a slave gateway.

In step S52, the gateway device determines whether it has scanned a master gateway, if not, it performs step S53, and if so, it performs step S54.

In step S53, the gateway device waits for a predetermined time interval.

In an optional embodiment, the gateway device may be provided with a timer, and the timer has a timing duration of a predetermined time interval. When the predetermined time interval expires, the gateway device may rescan the master gateway.

In step S54, the gateway device determines whether it successfully establishes a communication connection with the master gateway, if so, it performs step S55, and if not, it performs step S52.

In step S55, the gateway device determines that it has established the communication connection with the master gateway.

In this way, in the embodiment of the present disclosure, when the gateway device is newly added to the networking system or when the gateways in the networking system are re-networked, if it is determined that the gateway device is a slave gateway, the slave gateway may be connected to the networking system for communication by connecting with the master gateway. Here, the steps S51 to S55 may be considered as an initialization of the gateway device serving as the slave gateway.

In this way, in the embodiment of the present disclosure, cross-gateway scheduling may be achieved by scheduling different slave gateways through the master gateway. Moreover, since each device in the networking system is locally connected, the dependence of the sub-device on the cloud server is eliminated, and thus the networking system may be more stable and reliable. The information of the devices in the networking system may be transmitted without a cloud, the path of the information transmission is shorter than that that through the cloud server, and thus the response of the linkage between the devices is faster.

It is to be noted that a person skilled in the art may understand that the methods provided in the embodiment of the present disclosure may be executed alone or together with some methods in the embodiments of the present disclosure or some methods in the related art.

FIG. 11 shows a multi-gateway networking device according to an exemplary embodiment. As shown in FIG. 11, the device includes:
a first sending module 51, configured to receive, via a second class gateway, first information sent by a first sub-device; and
a first processing module 52, configured to generate control signaling when the first information satisfies a linkage rule.

The first sending module 51 is configured to send the control signaling to a second sub-device through the second class gateway, wherein the second sub-device and the first sub-device are connected to different second class gateways respectively.

The multi-gateway networking device according to the embodiment of the present disclosure is applied to a first class gateway.

In some embodiments, the device further includes a first receiving module, wherein:
the first sending module is configured to, within a predetermined window, broadcast a network performance parameter of the first class gateway;
the first receiving module is configured to, within the predetermined window, receive a network performance parameter of a third class gateway broadcasted by the third class gateway;
the first processing module 52 is configured to determine whether the first class gateway satisfies a predetermined condition under which the first class gateway is most qualified to serve as the first class gateway based on the network performance parameter of the first class gateway and the network performance parameter of the third class gateway; and
the first processing module 52 is configured to, when determining that the first class gateway does not satisfy the predetermined condition, disconnect from at least one second class gateway, and/or disconnect from at least one third class gateway, wherein the third class gateway is a backup gateway for the first class gateway.

In some embodiments, the first processing module 52 is configured to determine that the first class gateway is switched to be the third class gateway.

In some embodiments, the first sending module 51 is configured to send updated control data to a third class gateway if it determines that the first class gateway has updated control data, wherein the control data includes the linkage rule, and the third class gateway is a backup gateway for the first class gateway.

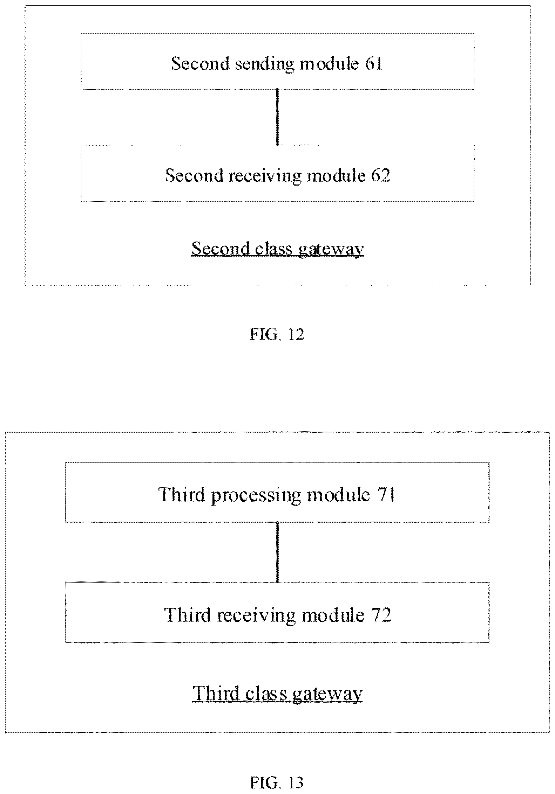

FIG. 12 shows a multi-gateway networking device according to an exemplary embodiment. As shown in FIG. 12, the device includes:
a second sending module 61, configured to send received first information of a first sub-device to a first class gateway if the first class gateway has been scanned; and
a second receiving module 62, configured to receive a control instruction generated by the first class gateway based on the first information, the control instruction being generated by the first class gateway when determining that the first information satisfies a linkage rule.

The second sending module 61 is configured to send the control instruction to a second sub-device, wherein the first sub-device and the second sub-device are connected to different second class gateways respectively.

The multi-gateway networking device according to the embodiment of the present disclosure is applied to a second class gateway.

FIG. 13 shows a multi-gateway networking device according to an exemplary embodiment. As shown in FIG. 13, the device includes:
a third processing module 71, configured to establish a connection with a first class gateway if the first class gateway has been scanned; and
a third receiving module 72, configured to obtain control data of the first class gateway from the first class gateway.

The control data includes at least a linkage rule, the linkage rule is configured for the first class gateway to generate a control instruction when determining that first information satisfies the linkage rule, the control instruction is configured to be sent by the first class gateway to a second sub-device, the first information is obtained by the first class gateway from a first sub-device, and the second sub-device and the first sub-device are connected to different second class gateways respectively.

The multi-gateway networking device according to the embodiment of the present disclosure is applied to a third class gateway.

In some embodiments, the device further includes a third sending module, wherein:
the third sending module is configured to, within a predetermined window, broadcast a network performance parameter of the third class gateway;
the third receiving module 72 is configured to, within the predetermined window, receive a network performance parameter of the first class gateway broadcasted by the first class gateway;
the third processing module 71 is configured to determine whether the third class gateway satisfies a predetermined condition under which the third class gateway is most qualified to serve as the first class gateway based on the network performance parameter of the third class gateway and the network performance parameter of the first class gateway, and
the third processing module 71 is configured to, when determining that the third class gateway satisfies the predetermined condition, determine to become the first class gateway and establish a connection with at least one third class gateway and/or at least one second class gateway.

In some embodiments, the third processing module 71 is configured to keep serving as the third class gateway when determining that the third class gateway does not satisfy the predetermined condition.

In some embodiments, the third class gateway includes a first backup gateway.

The third sending module is configured to, if the first class gateway has not been scanned, broadcast a network performance parameter of the first backup gateway within the predetermined window.

The third receiving module 72 is configured to receive a network performance parameter of at least one second backup gateway within the predetermined window.

The third processing module 71 is configured to determine whether the first backup gateway satisfies the predetermined condition under which the first backup gateway is most qualified to serve as the first class gateway based on the network performance parameter of the first backup gateway and the network performance parameter of the second backup gateway.

The third processing module 71 is configured to, when determining that the first backup gateway satisfies the predetermined condition, determine the first backup gateway to become the first class gateway and establish a communication connection with the at least one second backup gateway and/or the at least one second class gateway.

It is to be noted that a person skilled in the art may understand that the device provided in the embodiment of the present disclosure may be implemented alone or together with some devices in the embodiments of the present disclosure or some devices in the related art.

With respect to the devices in the above embodiments, the specific manner in which the individual modules perform the operations has been described in detail in the embodiments relating to the method, which will not be described in detail herein.

An embodiment of the present disclosure also provide a gateway device, including:
a processor; and
a memory for storing executable instructions of the processor
wherein the processor is configured to, when running the executable instructions, implement the multi-gateway networking method described in any embodiment of the present disclosure.

Herein, the gateway device may be, but is not limited to being, one of a first class gateway, a second class gateway, and a third class gateway.

The memory may include various types of storage media that are non-transitory computer storage media capable of keeping information stored thereon after the communication device is powered down.

The processor may be connected to the memory via a bus or the like for reading an executable program stored on the memory, e.g. to implement at least one of the methods as shown in FIGS. 6 to 10.

An embodiment of the present disclosure also provides a computer readable storage medium having an executable program stored thereon that, when being executed by a processor, implements the multi-gateway networking method described in any embodiment of the present disclosure, for example, at least one of the methods as shown in FIGS. 6 to 10.

With respect to the devices of the above embodiments, the specific manner in which the individual modules perform the operations has been described in detail in the embodiments relating to the method, which will not be described in detail herein.

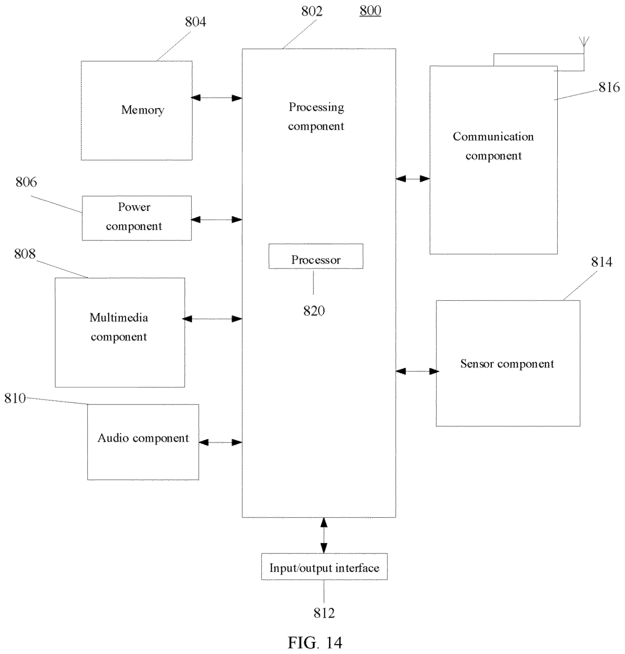

FIG. 14 is a block diagram of a user device 800 according to an exemplary embodiment. For example, the user device 800 may be a mobile phone, a computer, a digital broadcasting user device, a messaging device, a game console, a tablet device, a medical device, a fitness device, a personal digital assistant, or the like.

Referring to FIG. 14, the user device 800 may include one or more of a processing component 802, a memory 804, a power component 806, a multimedia component 808, an audio component 810, an input/output (I/O) interface 812, a sensor component 814, and a communication component 816.

The processing component 802 generally controls the overall operations of the user device 800, such as operations associated with display, telephone calls, data communications, camera operations, and recording operations. The processing component 802 may include one or more processors 820 to execute instructions to complete all or part of the steps of the foregoing method. In addition, the processing component 802 may include one or more modules to facilitate interaction between the processing component 802 and other components. For example, the processing component 802 may include a multimedia module to facilitate the interaction between the multimedia component 808 and the processing component 802.

The memory 804 is configured to store various types of data to support the operation at the user device 800. Examples of these data include instructions for any application or method operating on the user device 800, contact data, phone book data, messages, pictures, videos and the like. The memory 804 may be implemented by any type of volatile or nonvolatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 806 provides power to various components of the user device 800. The power component 806 may include a power management system, one or more power supplies, and other components associated with generating, managing, and distributing power for the user device 800.

The multimedia component 808 includes a screen that provides an output interface between the user device 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 808 includes a front camera and/or a rear camera. When the user device 800 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 810 is configured to output and/or input audio signals. For example, the audio component 810 includes a microphone (MIC), and when the user device 800 is in an operation mode, such as a call mode, a recording mode, and a voice recognition mode, the microphone is configured to receive an external audio signal. The received audio signal can be further stored in the memory 804 or sent via the communication component 816. In some embodiments, the audio component 810 further includes a speaker for outputting audio signals.

The I/O interface 812 provides an interface between the processing component 802 and a peripheral interface module. The above-mentioned peripheral interface module may be a keyboard, a click wheel, a button, and the like. These buttons may include but are not limited to home button, volume button, start button, and lock button.

The sensor component 814 includes one or more sensors for providing the user device 800 with various aspects of state evaluation. For example, the sensor component 814 can detect the on/off status of the user device 800 and the relative positioning of components. For example, the component is a display and keypad of the user device 800. The sensor component 814 can also detect the position change of the user device 800 or a component of the user device 800, the presence or absence of contact between the user and the user device 800, the orientation or acceleration/deceleration of the user device 800, and the temperature change of the user device 800. The sensor component 814 may include a proximity sensor configured to detect the presence of nearby objects when there is no physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the user device 800 and other devices. The user device 800 can access a wireless network based on a communication standard, such as WiFi, 4G, or 5G, or a combination thereof. In an exemplary embodiment, the communication component 816 receives a broadcast signal or broadcast related information from an external broadcast management system via a broadcast channel. In an exemplary embodiment, the communication component 816 further includes a near field communication (NFC) module to facilitate shortrange communication. For example, the NFC module can be implemented based on radio frequency identification (RFID) technology, infrared data association (IrDA) technology, ultrawideband (UWB) technology, Bluetooth (BT) technology and other technologies.

In an exemplary embodiment, the user device 800 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An exemplary embodiment also provides a non-transitory computer-readable storage medium including instructions, such as the memory 804 including instructions, and the instructions may be executed by the processor 820 of the user device 800 to complete the foregoing method. For example, the non-transitory computer-readable storage medium may be ROM, random access memory (RAM), CD-ROM, magnetic tape, floppy disk, optical data storage device and the like.

A person skilled in the art may easily conceive of other embodiments of the present disclosure upon consideration of the specification and practice of the invention disclosed herein. The present disclosure is intended to cover any variations, uses, or adaptations of the present disclosure that follow the general principles of the present disclosure and include the common general knowledge or conventional technical means in the technical field not disclosed by the present disclosure. The specification and embodiments are to be regarded as exemplary only, and the true scope and spirit of the present invention is indicated by the following claims.

It is to be understood that the present disclosure is not limited to the precise structures described above and illustrated in the accompanying drawings, and that various modifications and changes may be made without departing from the scope thereof. The scope of the present disclosure is limited only by the appended claims.

## Claims

1. A multi-gateway networking system, comprising a first class gateway, and at least one second class gateway connected to the first class gateway,
wherein the first class gateway is configured to: schedule the second class gateway and receive, through the second class gateway, first information sent by a first sub-device; and generate a control instruction in response to determining that the first information satisfies a linkage rule, and send the control instruction to a second sub-device through the second class gateway,
wherein the second sub-device and the first sub-device are connected to different second class gateways respectively.

2. The networking system according to claim 1, wherein
the networking system further comprises at least one third class gateway,
the third class gateway is a backup gateway for the first class gateway, and
the third class gateway is connected to the first class gateway and configured to switch to be the first class gateway in response to determining that failure of the first class gateway occurs.

3. The networking system according to claim 2, wherein
the first class gateway is configured to synchronize control data from the first class gateway to the third class gateway, the control data comprising the linkage rule, and
the third class gateway is configured to switch to be the first class gateway based on the control data.

4. The networking system according to claim 2, wherein
the third class gateway is configured to, in response to having scanned the first class gateway, determine whether the third class gateway satisfies a predetermined condition under which the third class gateway is most qualified to serve as the first class gateway based on a network performance parameter broadcasted by the third class gateway and a network perform parameter broadcasted by the first class gateway within a predetermined window, and
the third class gateway is configured to, in response to determining that the third class gateway satisfies the predetermined condition, determine to become the first class gateway and establish a connection with at least one third class gateway and/or the at least one second class gateway.

5. The networking system according to claim 4, wherein
the first class gateway is configured to, in response to determining that the third class gateway satisfies the predetermined condition, disconnect from the at least one second class gateway and/or the at least one third class gateway, and switch to be the third class gateway.

6. The networking system according to claim 4, wherein
the third class gateway is configured to keep serving as the third class gateway in response to determining that the third class gateway does not satisfy the predetermined condition.

7. The networking system according to claim 4, wherein
the third class gateway comprises a first backup gateway and a second backup gateway,
the first backup gateway is configured to, in response to having not scanned the first class gateway after accessing to the gateway system, determine whether the first backup gateway satisfies the predetermined condition under which the first backup gateway is most qualified to serve as the first class gateway based on a network performance parameter broadcasted by the first backup gateway and a network performance parameter broadcasted by at least one second backup gateway within the predetermined window, and
the first backup gateway is configured to, in response to determining that the first backup gateway satisfies the predetermined condition, determine to become the first class gateway and establish a connection with the at least one second backup gateway and/or the at least one second class gateway.

8. A multi-gateway networking method performed by a first class gateway, comprising:
receiving, via a second class gateway, first information sent by a first sub-device;
generating control signaling in response to determining that the first information satisfies a linkage rule; and
sending the control signaling to a second sub-device through the second class gateway,
wherein the second sub-device and the first sub-device are connected to different second class gateways respectively.

9. The method according to claim 8, comprising:
within a predetermined window, broadcasting a network performance parameter of the first class gateway and receiving a network performance parameter of a third class gateway broadcasted by the third class gateway;
determining whether the first class gateway satisfies a predetermined condition under which the first class gateway is most qualified to serve as the first class gateway based on the network performance parameter of the first class gateway and the network performance parameter of the third class gateway; and
in response to determining that the first class gateway does not satisfy the predetermined condition, disconnecting from at least one second class gateway, and/or disconnecting from at least one third class gateway,
wherein the third class gateway is a backup gateway for the first class gateway.

10. The method according to claim 9, comprising:
determining that the first class gateway is switched to be the third class gateway.

11. The method according to claim 8, comprising:
sending updated control data to a third class gateway in response to determining that the first class gateway has updated control data,
wherein the control data comprises the linkage rule, and the third class gateway is a backup gateway for the first class gateway.

12. A multi-gateway networking method performed by a second class gateway, comprising:
sending received first information of a first sub-device to a first class gateway in response to having scanned the first class gateway;
receiving a control instruction generated by the first class gateway based on the first information, the control instruction being generated by the first class gateway in response to determining that the first information satisfies a linkage rule; and
sending the control instruction to a second sub-device,
wherein the first sub-device and the second sub-device are connected to different second class gateways respectively.

13. A multi-gateway networking method performed by a third class gateway, comprising:
establishing a connection with a first class gateway in response to having scanned the first class gateway; and
obtaining control data of the first class gateway from the first class gateway,
wherein the control data comprises at least a linkage rule, the linkage rule is configured for the first class gateway to generate a control instruction in response to determining that first information satisfies the linkage rule, the control instruction is configured to be sent by the first class gateway to a second sub-device, the first information is obtained by the first class gateway from a first sub-device, and the second sub-device and the first sub-device are connected to different second class gateways respectively.

14. The method according to claim 13, comprising:
within a predetermined window, broadcasting a network performance parameter of the third class gateway and receiving a network performance parameter of the first class gateway broadcasted by the first class gateway;
determining whether the third class gateway satisfies a predetermined condition under which the third class gateway is most qualified to serve as the first class gateway based on the network performance parameter of the third class gateway and the network performance parameter of the first class gateway; and
in response to determining that the third class gateway satisfies the predetermined condition, determining to become the first class gateway and establishing a connection with at least one third class gateway and/or at least one second class gateway.

15. The method according to claim 14, further comprising:
keeping serving as the third class gateway in response to determining that the third class gateway does not satisfy the predetermined condition.

16. The method according to claim 15, wherein the third class gateway comprises a first backup gateway;
in response to having not scanned the first class gateway, within the predetermined window, a network performance parameter of the first backup gateway is broadcasted and a network performance parameter of at least one second backup gateway is received;
whether the first backup gateway satisfies the predetermined condition under which the first backup gateway is most qualified to serve as the first class gateway is determined based on the network performance parameter of the first backup gateway and the network performance parameter of the second backup gateway;
in response to determining that the first backup gateway satisfies the predetermined condition, the first backup gateway is determined to become the first class gateway and to establish a connection with the at least one second backup gateway and/or the at least one second class gateway.

17. A multi-gateway networking device applied to a first class gateway, comprising:
a first sending module, configured to receive, via a second class gateway, first information sent by a first sub-device; and
a first processing module, configured to generate control signaling in response to determining that the first information satisfies a linkage rule,
the first sending module is configured to send the control signaling to a second sub-device through the second class gateway,
wherein the second sub-device and the first sub-device are connected to different second class gateways respectively.

18. The device according to claim 17, comprising a first receiving module, wherein
the first sending module is configured to, within a predetermined window, broadcast a network performance parameter of the first class gateway,
the first receiving module is configured to, within the predetermined window, receive a network performance parameter of a third class gateway broadcasted by the third class gateway,
the first processing module is configured to determine whether the first class gateway satisfies a predetermined condition under which the first class gateway is most qualified to serve as the first class gateway based on the network performance parameter of the first class gateway and the network performance parameter of the third class gateway, and
the first processing module is configured to, in response to determining that the first class gateway does not satisfy the predetermined condition, disconnect from at least one second class gateway, and/or disconnect from at least one third class gateway,
wherein the third class gateway is a backup gateway for the first class gateway.

19. The device according to claim 18, wherein
the first processing module is configured to determine that the first class gateway is switched to be the third class gateway.

20. The device according to claim 17, wherein
the first sending module is configured to send updated control data to a third class gateway in response to determining that the first class gateway has updated control data,
wherein the control data comprises the linkage rule, and the third class gateway is a backup gateway for the first class gateway.

21. A multi-gateway networking device applied to a second class gateway, comprising:
a second sending module, configured to send received first information of a first sub-device to a first class gateway in response to having scanned the first class gateway; and
a second receiving module, configured to receive a control instruction generated by the first class gateway based on the first information, the control instruction being generated by the first class gateway in response to determining that the first information satisfies a linkage rule,
the second sending module is configured to send the control instruction to a second sub-device,
wherein the first sub-device and the second sub-device are connected to different second class gateways respectively.

22. A multi-gateway networking device applied to a third class gateway, comprising:
a third processing module, configured to establish a connection with a first class gateway in response to having scanned the first class gateway; and
a third receiving module, configured to obtain control data of the first class gateway from the first class gateway,
wherein the control data comprises at least a linkage rule, the linkage rule is configured for the first class gateway to generate a control instruction in response to determining that first information satisfies the linkage rule, the control instruction is configured to be sent by the first class gateway to a second sub-device, the first information is obtained by the first class gateway from a first sub-device, and the second sub-device and the first sub-device are connected to different second class gateways respectively.

23. The device according to claim 22, further comprising a third sending module,
the third sending module is configured to, within a predetermined window, broadcast a network performance parameter of the third class gateway,
the third receiving module is configured to, within the predetermined window, receive a network performance parameter of the first class gateway broadcasted by the first class gateway,
the third processing module is configured to determine whether the third class gateway satisfies a predetermined condition under which the third class gateway is most qualified to serve as the first class gateway based on the network performance parameter of the third class gateway and the network performance parameter of the first class gateway, and
the third processing module is configured to, in response to determining that the third class gateway satisfies the predetermined condition, determine to become the first class gateway and establish a connection with at least one third class gateway and/or at least one second class gateway.

24. The device according to claim 23, wherein
the third processing module is configured to keep serving as the third class gateway in response to determining that the third class gateway does not satisfy the predetermined condition.

25. The device according to claim 24, wherein the third class gateway comprises a first backup gateway,
the third sending module is configured to, in response to having not scanned the first class gateway, broadcast a network performance parameter of the first backup gateway within the predetermined window,
the third receiving module is configured to receive a network performance parameter of at least one second backup gateway within the predetermined window,
the third processing module is configured to determine whether the first backup gateway satisfies the predetermined condition under which the first backup gateway is most qualified to serve as the first class gateway based on the network performance parameter of the first backup gateway and the network performance parameter of the second backup gateway, and
the third processing module is configured to, in response to determining that the first backup gateway satisfies the predetermined condition, determine the first backup gateway to become the first class gateway and establish a communication connection with the at least one second backup gateway and/or the at least one second class gateway.

26. A gateway device, comprising:
a processor; and
a memory storing executable instructions by the processor,
wherein the processor is configured for, when running the executable instructions, implementing the multi-gateway networking method according to any one of claims 1 to 12, 13, 14 to 16.

27. A computer readable storage medium having an executable program stored thereon that, when being executed by a processor, implements the multi-gateway networking method according to any one of claims 1 to 12, 13, 14 to 16.
